# EUROPÄISCHE PATENTSCHRIFT

(11) **EP 0 728 089 B1**
(45) Veröffentlichungstag und Bekanntmachung des Hinweises auf die Patenterteilung: **12.01.2000**
(21) Anmeldenummer: 95943999.3
(22) Anmeldetag: 14.07.1995
(51) Int. Cl.: B60T 13/74

(54) **ELEKTROMECHANISCH BETÄTIGBARE SCHEIBENBREMSE**
ELECTROMECHANICAL DISC BRAKE
FREIN A DISQUE A COMMANDE ELECTROMECANIQUE

(30) Priorität: 21.07.1994 DE 4425936; 28.03.1995 DE 19511287
(43) Veröffentlichungstag der Anmeldung: 28.08.1996
(73) Patentinhaber: ITT Automotive Europe GmbH, 60488 Frankfurt am Main (DE)
(72) Erfinder: HALASY-WIMMER, Georg, D-65760 Eschborn (DE); BILL, Karlheinz, D-63303 Dreieich (DE); BALZ, Jürgen, D-65510 Hünstetten-Oberlibbach (DE); KUNZE, Lothar, D-65719 Hofheim (DE); SCHMITT, Stefan, D-65343 Eltville (DE)
(86) Internationale Anmeldenummer: EP9502764
(87) Internationale Veröffentlichungsnummer: WO9603301

(56) Entgegenhaltungen:
- WO-A-89/03490
- WO-A-90/03905
- JP-A- 1 311 844
- US-A- 4 850 459

## Beschreibung

Die Erfindung betrifft eine elektromechanisch betätigbare Scheibenbremse für Kraftfahrzeuge mit einem Bremssattel, sowie einer am Bremssattel angeordneten Betätigungseinheit, mit zwei mit je einer Seitenfläche einer Bremsscheibe zusammenwirkenden, im Bremssattel begrenzt verschiebbar angeordneten Reibbelägen, wobei einer der Reibbeläge mittels eines Betätigungselementes durch die Betätigungseinheit direkt und der andere Reibbelag durch die Wirkung einer vom Bremssattel aufgebrachten Reaktionskraft mit der Bremsscheibe in Eingriff bringbar ist, und wobei die Betätigungseinheit einen koaxial zum Betätigungselement angeordneten Elektromotor sowie ein wirkungsmäßig zwischen ihm und dem Betätigungselement angeordnetes Untersetzungsgetriebe aufweist.

Eine derartige elektromechanisch betätigbare Scheibenbremse ist z.B. aus der EP- 0 394 238 B1 bekannt. Die Betätigungseinheit der bekannten Scheibenbremse besteht aus einem Elektromotor, der mit einem Planetengetriebe zusammenwirkt, dessen Planetenräder ein Ringrad antreiben, dessen Drehbewegung über Lagermittel auf eine Betätigungshülse übertragen wird bzw. deren Axialverschiebung bewirkt, durch die der der Betätigungseinheit zugeordnete Reibbelag in Eingriff mit der Bremsscheibe gebracht wird. Der Elektromotor und das Planetengetriebe sind dabei in der Betätigungsrichtung der Scheibenbremse nebeneinander angeordnet. Als nachteilig wird bei der bekannten elektromechanisch betätigbaren Scheibenbremse insbesondere die verhältnismäßig beträchtliche axiale Baulänge der Betätigungseinheit empfunden.

Es ist daher Aufgabe der vorliegenden Erfindung, eine elektromechanisch betätigbare Scheibenbremse der eingangs genannten Gattung dahingehend zu verbessern, daß ihre Gesamtbaugröße, insbesondere die axiale Baulänge der Betätigungseinheit, erheblich verkürzt wird.

Diese Aufgabe wird erfindungsgemäß dadurch gelöst, daß der Rotor des Elektromotors ringförmig ausgebildet ist und das Untersetzungsgetriebe radial umgreift und daß das Untersetzungsgetriebe als ein Rollengewindetrieb ausgebildet ist, dessen Gewindemutter mit dem Rotor in kraftübertragender Verbindung steht. Eine derart aufgebaute elektromechanisch betätigbare Scheibenbremse zeichnet sich durch hohe Dynamik der Bremsbetätigung sowie eine extrem kompakte Bauweise aus, bei der hohe, massenbezogene Bremsmomente übertragen werden können.

Bei einer kostengünstig herstellbaren Weiterbildung der Erfindung ist der Rollengewindetrieb als ein Rollengengewindetrieb mit axialer Rückführung der Rollen ausgebildet. Dabei ist es besonders sinnvoll, wenn das Betätigungselement durch die Spindel des Rollengewindetriebs gebildet ist.

Um eine erhebliche Reduzierung des vom Elektromotor aufzubringenden erforderlichen Antriebsmoments zu erreichen erfolgt die Kraftübertragung zwischen dem Rotor und der Gewindemutter mittels eines Planetengetriebes, dessen Sonnenrad am Rotor ausgebildet ist, während die Planetenräder an der Gewindemutter gelagert sind und mit einer das Hohlrad des Planetengetriebes bildenden, im Bremssattel ausgebildeten Innenverzahnung im Eingriff stehen. Dabei ist es besonders vorteilhaft, wenn zwischen dem Rotor und der Getriebemutter ein Nadellager sowie ein Kugellager vorgesehen sind, wobei die radial außenliegende Laufbahn des Kugellagers im Rotor und die radial innenliegende Laufbahn zumindest teilweise in der Gewindemutter ausgebildet sind. Durch diese Maßnahmen wird sowohl eine Verringerung der elektrischen Verlustleistung als auch eine Vergrößerung des Rotorwinkels erreicht, die sich insbesondere für eine Lagesensierung der Gewindespindel, die zur Positionierung der Beläge erforderlich ist, als günstig erweist.

Eine gleichmäßige Übertragung der vom Elektromotor aufgebrachten Betätigungskraft wird bei einer weiteren Ausgestaltung des Erfindungsgegenstandes dadurch erreicht, daß die Spindel mit einer Kraftübertragungsplatte zusammenwirkt, die dem direkt betätigbaren Reibbelag zugeordnet ist.

Eine Minimierung von auf die innerhalb des Rollengewindetriebs auftretende Reibung zurückzuführenden Wirkungsgradverlusten wird nach einem vorteilhaften Erfindungsmerkmal dadurch erreicht, daß zwischen der Gewindespindel und der Kraftübertragungsplatte eine der Übertragung von Druckkräften dienende Druckstange angeordnet ist.

Eine momentenfreie Übertragung der Druckkräfte zwischen der Gewindespindel und der Kraftübertragungsplatte wird dabei vorzugsweise dadurch erreicht, daß die Druckstange teilweise innerhalb der Gewindespindel angeordnet und mittels zweier Kugelkalotten gelagert ist, von denen die erste in der Gewindespindel vorgesehen ist, während die zweite in einem axialen Fortsatz der Kraftübertragungsplatte ausgebildet ist. Dabei ist es besonders vorteilhaft, wenn die erste Kugelkalotte etwa in der Mitte der axialen Länge der Gewindespindel bzw. in dem durch die Gewinderollen begrenzten Bereich der Gewindespindel angeordnet ist.

Eine torsionsfeste Verbindung zwischen Gewindespindel und Kraftübertragungsplatte, die eine günstige Übertragung von aus der Zuspannkraft resultierenden Torsionsmomenten ermöglicht, wird nach einem weiteren Erfindungsgemerkmal dadurch erreicht, daß zwischen der Gewindespindel und der Kraftübertragungsplatte ein metallischer Faltenbalg vorgesehen ist, der koaxial zur Druckstange angeordnet und mit der Gewindespindel sowie der Kraftbertragungsplatte unlösbar verbunden, vorzugsweise verschweißt ist. Dabei ist es besonders sinnvoll, wenn der der Spindel zugeordnete Reibbelag mittels einer Zugfeder an der Kraftübertragungsplatte gefesselt ist.

Eine optimale Lagerung der Hohlwelle des in der Betätigungseinheit integrierten Elektromotors wird bei einer vorteilhaften Weiterbildung des Erfindungsgegenstandes dadurch erreicht, daß die Gewindemutter eine radiale Erweiterung aufweist, die ihrer Abstützung an einem Radiallager dient, das als Kreuzrollenlager bzw. als Vierpunktlager ausgebildet ist. Dabei ist es besonders vorteilhaft, wenn der Lagerinnenring des Radiallagers durch den Umfangsbereich der Erweiterung gebildet ist. Durch seine Fähigkeit, hohe Axial- und Radialkräfte sowie Kippmomente aufnehmen zu können, trägt die erfindungsgemäße Lagerung zur besseren Stabilisierung der Hohlwelle bei.

Der Elektromotor kann bei weiteren vorteilhaften Ausführungen der Erfindung als ein Außenläufermotor ausgebildet sein, der beispielsweise als ein Permanentmagnet erregter, elektronisch kommutierbarer Elektromotor ( Torque-Motor) oder als ein geschalteter Reluktanzmotor (SR-Motor) ausgeführt sein kann.

Die erwähnten Motorarten sind zur Erzeugung hoher Drehmomente im Stillstand besonders geeignet.

Um eine gute Positionierbarkeit des Rotors, insbeondere beim Einsatz des vorhin erwähnten Torque-Motors zu erreichen, sieht eine weitere Ausgestaltung der Erfindung vor, daß ein kontaktloser Winkelgeber (Resolver) vorgesehen ist, der mit dem Untersetzungsgetriebe zusammenwirkt und eine Erkennung der Position des Betätigungselementes ermöglicht. Der Winkelgeber kann dabei vorzugsweise durch zwei durch einen Luftspalt voneinander getrennte, elektrische Wicklungen tragende Ringe gebildet sein, wobei der eine, vorzugsweise radial innere Ring mit dem Rotor fest verbunden ist, während der andere, vorzugsweise radial äußere Ring im Gehäuse drehtest angeordnet ist. Ein derartiger Resolver ermöglicht eine sehr hohe Auflösung, so daß hierdurch eine für eine gezielte und optimal dosierbare Abbremsung erforderliche, ausreichend fein zu realisierende Positionierbarkeit der Reibbeläge erreicht wird.

Das Ausgangssignal des Resolvers kann dabei gleichzeitig zur Kommutierung des Torque-Motors verwendet werden.

Nach einem weiteren Erfindungsmerkmal ist bei einer Variante des Erfindungsgegenstandes zwischen der Gewindemutter und der Spindel eine Rückstellfeder vorgesehen, die nach erfolgter Betätigung eine Drehbewegung der Gewindemutter entgegen der Betätigungsdrehrichtung ermöglicht. Durch diese Maßnahme kann verhindert werden, daß bei einem nach der Bremsbetätigung auftretenden Stromausfall die Bremse durch ihre eigene Hysterese im betätigten Zustand verharrt, so daß Restbremsmomente am Rad weitergehend eliminiert werden.

Eine weitere vorteilhafte Ausführung der Erfindung sieht vor, daß zwischen dem Betätigungselement bzw. der Kraftübertragungsplatte und dem ersten Reibbelag eine Verdrehsicherung vorgesehen ist. Als Verdrehsicherung kann beispielsweise die Fixierung einer Belaghaltefeder dienen, die an für hydraulisch betätigbare Scheibenbremsen vorgesehenen Reibbelägen angebracht ist.

Zur sicheren Erkennung des Kontaktes zwischen den Reibbelägen und der Bremsscheibe weisen die Reibbeläge Kontaktstifte auf, die eine Messung des elektrischen Widerstandes zwischen ihnen und der Bremsscheibe ermöglichen. Außerdem wird durch diese Maßnahme erreicht, daß das an den Kontaktstiften abzugreifende Signal als Eingangssignal einer Regelung oder Steuerung zur Verfügung gestellt werden kann, das außerdem eine Information über den Verschleißzustand der Reibbeläge vermittelt.

Um den Betätigungsmechanismus insbesondere vor Verunreinigungen, beispielsweise Spritzwasser, wirksam zu schützen, sieht eine andere vorteilhafte Weiterbildung der Erfindung vor, daß zwischen dem Gehäuse und dem Betätigungselement (Spindel) ein elastisches Dichtelement angeordnet ist.

Die Erfindung wird in der nachfolgenden Beschreibung von fünf Ausführungsbeispielen unter Bezugnahme auf die beiliegende Zeichnung näher erläutert.

In der Zeichnung zeigt:
- Fig. 1: eine erste Ausführung der erfindungsgemäßen, elektromechanisch betätigbaren Scheibenbremse im Axialschnitt;
- Fig. 2: eine zweite Ausführung des Erfindungsgegenstands in einer der Fig. 1 entsprechenden Darstellung;
- Fig. 3,4 u. 5: eine dritte, vierte und fünfte Ausführung der erfindungsgemäßen elektromechanischen Scheibenbremse in einer der Fig. 1 entsprechenden Darstellung.

Die in der Zeichnung dargestellte, elektromechanisch betätigbare Scheibenbremse nach der Erfindung, die im gezeigten Beispiel als eine Schwimmsattel-Scheibenbremse ausgebildet ist, besteht im wesentlichen aus einem in einem nicht gezeigten feststehenden Halter verschiebbar gelagerten Bremssattel 1 sowie einer Betätigungseinheit 2, deren Gehäuse 8 mittels nicht gezeigter Befestigungselemente am Bremssattel 1 angeordnet ist. Ein Paar von Reibbelägen 4 und 5 ist im Bremssattel 1 derart angeordnet, daß sie der linken und der rechten Seitenfläche einer Bremsscheibe 3 zugewandt sind.

Nachstehend wird der in der Zeichnung rechts gezeigte Reibbelag 4 als erster Reibbelag und der andere, mit 5 bezeichnete Reibbelag als zweiter Reibbelag bezeichnet.

Während der erste Reibbelag 4 mittels eines Betätigungselements 30 durch die Betätigungseinheit 2 direkt mit der Bremsscheibe 3 in Eingriff bringbar ist, wird der zweite Reibbelag 5 durch die Wirkung einer bei der Betätigung der Anordnung vom Bremssattel 1 aufgebrachten Reaktionskraft gegen die gegenüberliegende Seitenfläche der Bremsscheibe 3 gedrückt.

Die vorhin erwähnte Betätigungseinheit 2 besteht aus einem Elektromotor 6, der im dargestellten Beispiel als ein Permanentmagnet erregter, elektronisch kommutierbarer (Torque) Motor, dessen Stator 9 unbeweglich im Gehäuse 8 angeordnet ist und dessen Rotor 10 bzw. Hohlwelle durch einen ringförmigen Träger 28 gebildet ist, der mehrere Permanentmagnetsegmente 29 trägt. Zwischen dem Torque-Motor 6 und dem vorhin erwähnten, vorzugsweise koaxial zum Motor 6 angeordneten Betätigungselement 30 ist wirkungsmäßig ein Untersetzungsgetriebe 7 angeordnet, das im gezeigten Beispiel als ein Rollengewindetrieb 11 bis 14 ausgebildet ist. Der Rollengewindetrieb besteht dabei aus einer Gewindemutter 11 sowie einer Gewindespindel 14, wobei in der Gewindemutter 11 achsparallel Gewinderollen 12,13 angeordnet sind, die bei einer Rotationsbewegung der Gewindemutter 11 sich ohne axiale Verschiebung planetenartig drehen und die Gewindespindel 14 in eine axiale Bewegung versetzen. Für eine radiale Führung der Gewinderollen 12,13 sorgen zwei an deren Enden angeordnete Führungsscheiben 40 und nicht gezeigte Zahnkränze.

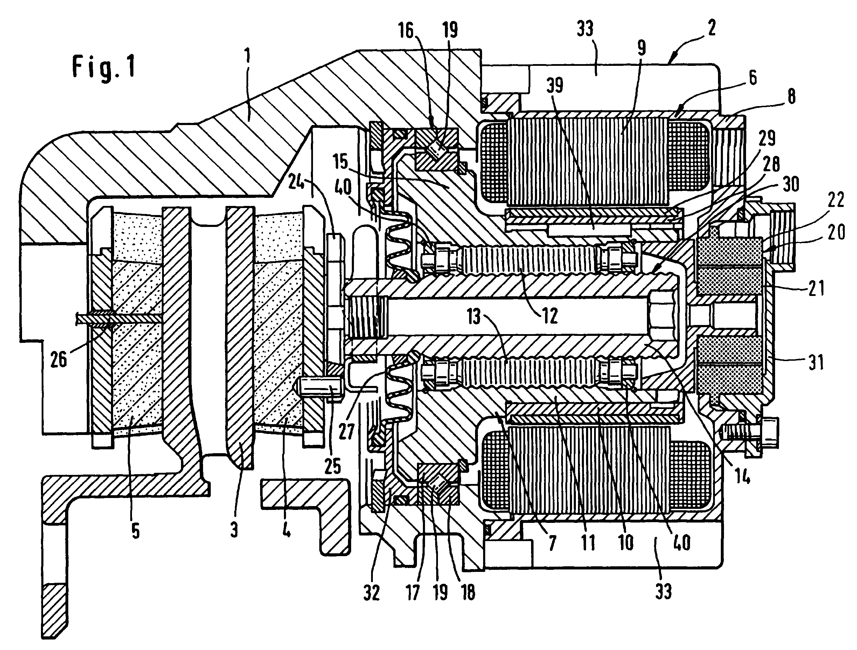

Die Anordnung ist dabei vorzugsweise derart getroffen, daß der Rotor 10 des Torque-Motors 6 drehtest, beispielsweise mittels einer Paßfeder 39, mit der Gewindemutter 11 verbunden ist, während die Gewindespindel 14 das vorhin erwähnte Betätigungselement 30 bildet, das unter Zwischenschaltung einer Kraftübertragungsplatte 24 den ersten Reibbelag 4 betätigt. Zwischen der Kraftübertragungsplatte 24 und dem ersten Reibbelag 4 ist vorzugsweise eine Verdrehsicherung 25 vorgesehen, die durch einen im Reibbelag 4 eingepreßten Stift gebildet ist, der von einer in der Kraftübertragungsplatte 24 ausgebildeten Ausnehmung aufgenommen wird. Der Führung sowohl des Untersetzungsgetriebes 7 als auch der Hohlwelle bzw. des Rotors 10 dient ein am Bremssattel 1 sich abstützendes Radiallager, im gezeigten Beispiel ein Kreuzrollenlager 16, das aus einem mit dem Bremssattel 1 zusammenwirkenden, in Fig. 1 geteilt ausgeführten Lageraußenring 18, einem auf einer kragenförmigen radialen Erweiterung 15 der Gewindemutter 11 angeordneten Lagerinnenring 17 sowie mehreren, zwischen den beiden Lagerringen 17,18 angeordneten Zylinderrollen 19 besteht. Die Lagerringe 17,18 bilden vier rechtwinklig zueinander angeordnete Laufbahnen, die um 45° zur Lagerebene geneigt sind, bzw. zwei um 90° versetzte Laufbahnpaare, auf denen die Zylinderrollen 19 (in X-Anordnung) abwechselnd in einem der beiden Laufbahnpaaren abwälzen. Da das verwendete Kreuzrollenlager 16 jede beliebige Kombination von Axial-, Radial- sowie Kippmomentbelastungen aufnehmen kann, kann auf ein zweites Lager verzichtet werden. Statt eines Kreuzrollenlagers kann auch ein Vierpunktlager Verwendung finden.

Um den Rollengewindetrieb 7 exakt positionieren sowie Steuersignale für die elektronische Kommutierung des Torque-Motors 6 gewinnen zu können, ist im Gehäuse 8 der Betätigungseinheit 2 ein kontaktloser Meßwert- bzw. Winkelgeber, ein sogenannter Resolver 20, vorgesehen. Im dargestellten Beispiel besteht der Resolver 20, aus zwei koaxial zueinander durch einen Luftspalt voneinander getrennten Ringen 21,22, die elektrische Wicklungen tragen. Der radial innenliegende Ring 21 ist dabei mit der Gewindemutter 11 verbunden, während der andere, radial äußere Ring 22 drehfest im Gehäuse 8 angeordnet ist.

Der sicheren Erkennung einer Berühung zwischen den Reibbelägen 4,5 mit der Bremsscheibe 3 sind die Reibbeläge 4,5 mit Kontaktstiften 26 versehen. Der Innenraum des Gehäuses 8 wird einerseits durch einen im Bereich des Resolvers 20 am Gehäuse 8 angebrachten Deckel 31 und andererseits durch eine elastische, membranartige Dichtung 27 vor Verunreinigungen, beispielsweise Spritzwasser, geschützt. Die Dichtung 27 ist dabei vorzugsweise zwischen dem Betätigungselement 30 bzw. der Gewindespindel 14 und einem am Lageraußenring 18 axial anliegenden Haltering 32 eingespannt.

Um schließlich die im Betrieb des Torque-Motors 6 entstehende Wärme wirksam an die Umgebung weiterleiten zu können, ist das Gehäuse 8 mit großflächigen Kühlrippen 33 versehen.

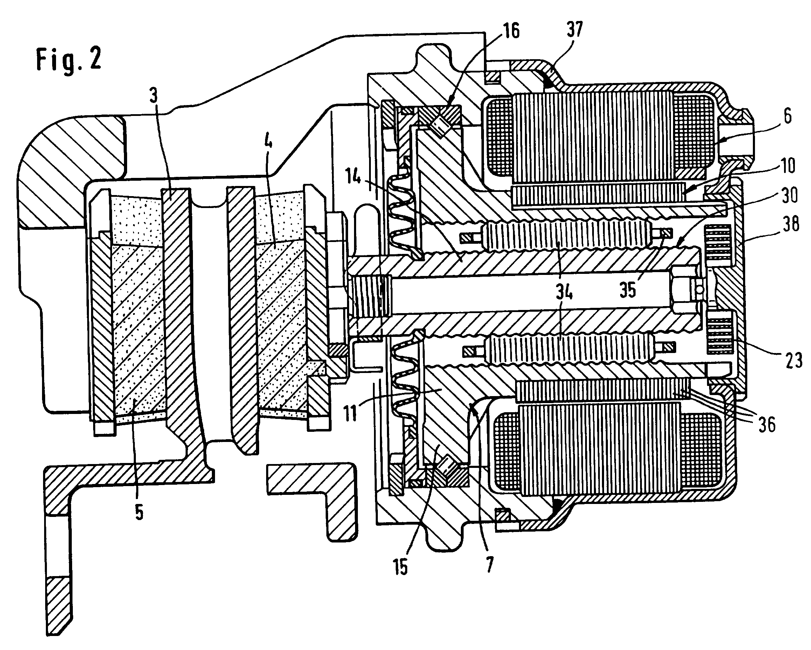

Bei der in Fig. 2 gezeigten Ausführung des Erfindungsgegenstandes findet als Antrieb für die Betätigungseinheit 2 ein geschalteter Reluktanz-Motor (SR-Motor) Verwendung. Der Lagerinnenring bzw. das radial innenliegende Laufbahnpaar des vorhin erwähnten Kreuzrollenlagers 16 ist durch den Umfangsbereich der Erweiterung 15 der Gewindemutter 11 gebildet. Durch die einteilige Ausführung des Innenlagerringes mit der Gewindemutter 11 werden sowohl eine höhere Laufgenauigkeit als auch ein verringerter Montageaufwand erzielt, sowie eine Modulbauweise ermöglicht. Das Untersetzungsgetriebe 7 ist in dem in Fig. 2 dargestellten Beispiel als ein Rollengewindetrieb mit axialer Rückführung der Rollen 34 ausgebildet, die in einem Käfig 35 angeordnet sind, der sie parallel zur Gewindespindel 14 und ebenso in gleichem Abstand auf dem Spindelumfang hält. Die Gewinderollen 34 laufen bei ihrem Umlauf anschließend in eine in der Gewindemutter 11 ausgebildete, nicht gezeigte Axialnut, so daß sie sich sowohl aus der Gewindemutter 11 als auch dem Spindelgewinde lösen. Die axiale Rückführung der Rollen 34 zu ihrem Ausgangspunkt wird durch nicht gezeigte Nocken gesteuert, die in das Mutterngewinde geschraubt sind. Der Rotor 10 des SR-Motors ist durch mehrere, auf der Gewindemutter 11 nebeneinander angeordnete ringförmige Rotorbleche 36 gebildet, die mit der Gewindemutter 11 drehtest, vorzugsweise formschlüssig, verbunden sind. Der bei der zweiten Ausführung des Erfindungsgegenstandes verwendete SR-Motor verträgt höhere Temperaturen, so daß die vorhin erwähnten Kühlrippen am Gehäuse 8 der Betätigungseinheit 2 entfallen können.

Um zu verhindern, daß bei einem nach erfolgter Bremsung auftretenden Ausfall der Steuerelektronik durch die eigene Hysterese der Betätigungseinheit verursachte Restbremsmomente am Rad wirken, ist schließlich zwischen der Gewindemutter 11 und einem das Motorgehäuse 37 verschließenden Deckel 38 eine vorzugsweise spiralförmige Rückstellfeder 23 vorgesehen, die die Gewindemutter 11 entgegen der Betätigungsdrehrichtung verstellt, so daß die Reibbeläge 4,5 von der Bremsscheibe 3 abheben können. Zur gleichmäßigen Einleitung der Betätigungskräfte in die Reibbeläge 4,5 muß der Bremssattel 1 massiv ausgelegt sein. Damit weinger Biegemomente von den Reibbellägen 4,5 in das Gehäuse 8 der Betätigungseinheit 2 eingeleitet werden können, ist es sinnvoll, den Bremssattel 1 als Rahmensattel auszubilden. Dadurch werden in das Gehäuse lediglich Zugkräfte eingeleitet, so daß die Lagerung der Betätigungseinheit 2 nicht durch innere Biegespannungen im Lagersitz belastet wird.

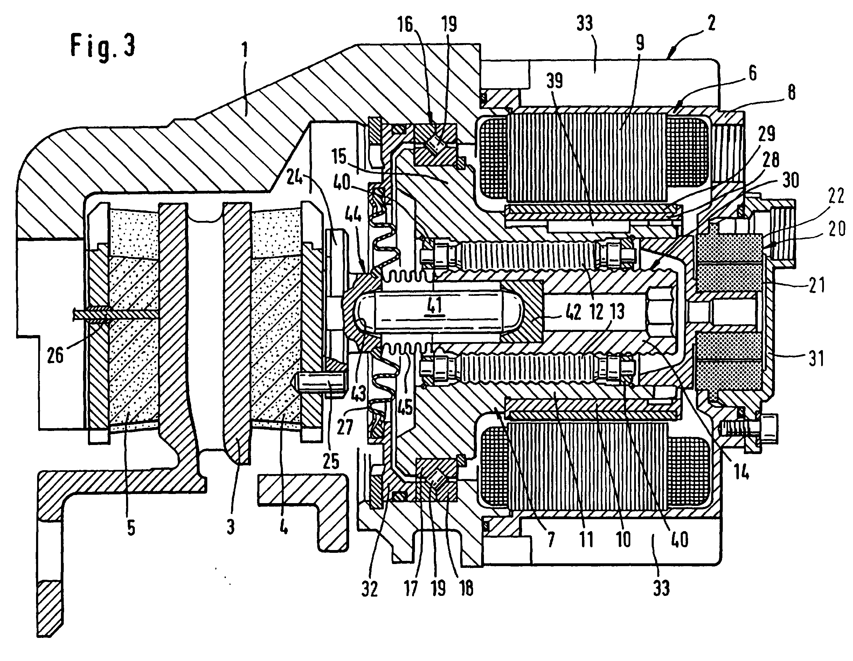

Bei dem in Fig. 3 gezeigten dritten Ausführungsbeispiel des Erfindungsgegenstandes erfolgt die Übertragung von Druckkräften zwischen der Gewindespindel 14 und der Kraftübertragungsplatte 24 mittels einer teilweise innerhalb der Gewindespindel 14 angeordneten Druckstange 41, die in zwei Kugelkalotten 42,43 gelagert ist. Die erste Kugelkalotte 42 ist dabei etwa in der Mitte der axialen Länge der Gewindespindel 14, also innerhalb des zwischen den Gewinderollen 12,13 liegenden Bereichs, angeordnet, während die zweite, dem Reibbelag 4 näher liegende Kugelkalotte 43 in einem axialen Fortsatz 44 der Kraftübertragungsplatte 24 ausgebildet ist. Außerdem ist zwischen der Kraftübertragungsplatte 24 bzw. ihrem Fortsatz 44 und der Gewindespindel 14 ein metallischer Faltenbalg 45 vorgesehen bzw. mit beiden Teilen verschweißt, der eine torosionsfeste Verbindung zur Übertragung von aus der von der Gewindespindel 14 aufgebrachten Zuspannkraft resultierenden Torsionsmomenten bildet. Durch diese Maßnahmen werden bei der Verwendung des Rollengewindetriebs auftretende Wirkungsgradverluste minimiert, die auf die starke Reibung zurückzuführen sind, die durch die auf den Rollengewindetrieb wirkenden Momente verursacht wird.

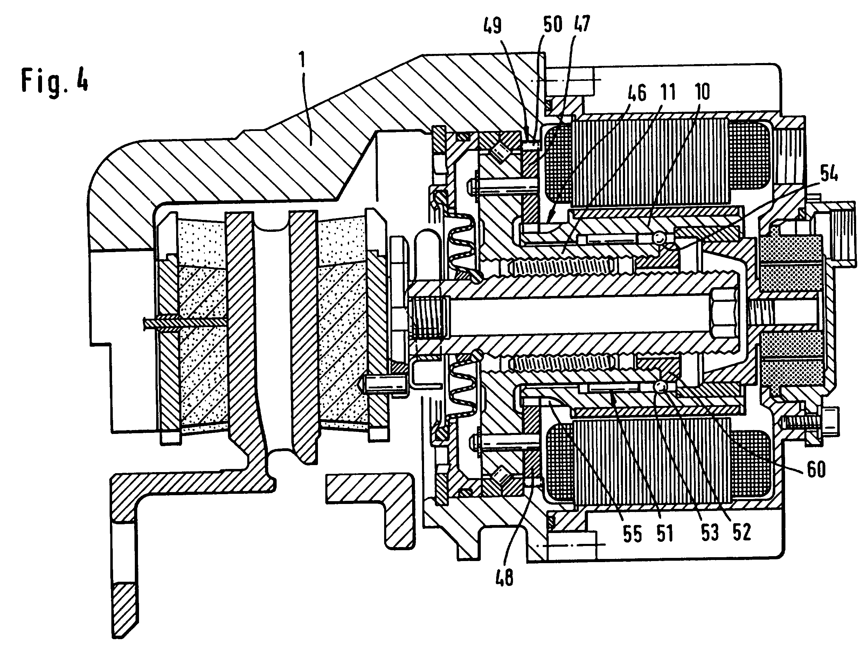

Eine Reduzierung des erforderlichen Motormoments wird bei der in Fig. 4 dargestellten vierten Ausführungsform der Erfindung durch zweckmäßige Integration eines Planetengetriebes 46,47,48,49 erreicht. Das Planetengetriebe, das wirkungsmäßig zwischen dem Rotor 10 und der Gewindemutter 11 angeordnet ist, besteht aus einem Sonnenrad 46, das vorzugsweise durch einen am Rotor 10 ausgebildeten außen verzahnten Bereich 55 gebildet ist, mehreren Planetenrädern, von denen zwei dargestellt und mit den Bezugszeichen 47 und 48 versehen sind, sowie einem Hohlrad 49, das durch eine im Bremssattel 1 ausgebildete Innenverzahnung 50 gebildet ist. Die Lagerung des Rotors auf der Gewindemutter 11 erfolgt mittels einer Kombination eines schematisch angedeuteten Nadellagers 51 sowie eines Kugellagers 52, dessen radial außenliegende Laufbahn 53 im Rotor 10 ausgebildet ist, während dessen radial innenliegende Laufbahn 54 teilweise am Ende der Gewindemutter 11 und teilweise an einer mit der Gewindemutter 11 verschraubten Hülse 60 ausgeformt ist. Durch diese Maßnahmen wird erreicht, daß eine größere Steigung des Spindelgewindes mit höherem Wirkungsgrad gewählt werden kann.

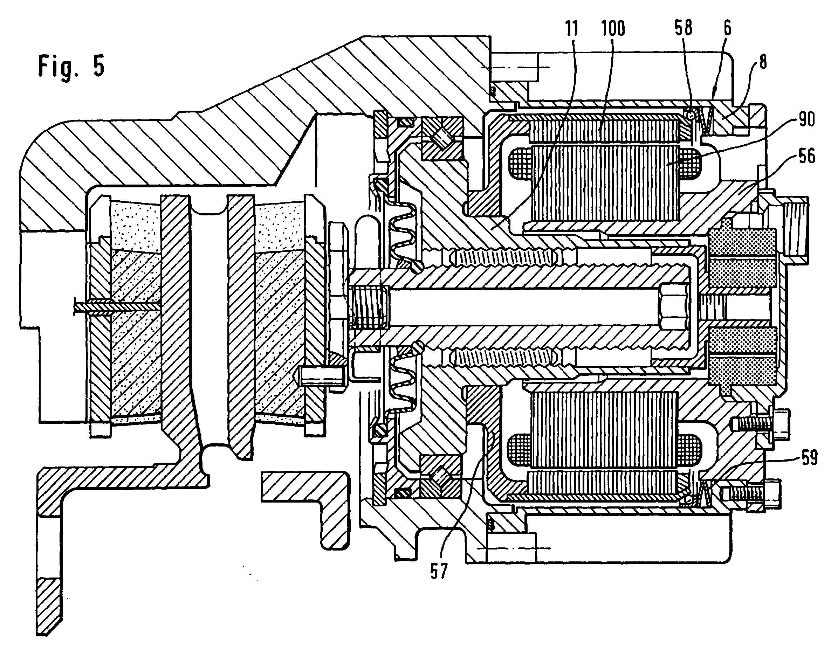

Fig. 5 der Zeichnung zeigt schließlich eine fünfte Ausführungsform des Erfindungsgegenstandes, bei der der Elektromotor 6 als ein Außenläufermotor ausgeführt ist. Der Stator 90 des Elektromotors 6 ist bei dem gezeigten Ausführungsbeispiel auf einem ortsfest im Gehäuse 8 angeordneten zylindrischen Teil 56 aufgepreßt, über welches die im Betrieb entstehende Wärme nach außen an das Gehäuse 86 abgeführt wird. Der den Stator 90 umschließende Rotor 100 ist mittels eines glockenförmigen Flansches 57 mit der Gewindemutter 11 verbunden und damit auf dieser Seite auch gelagert. Um sicherzustellen, daß auch kleine Luftspalte zwischen Rotor 100 und Stator 90 realisiert werden können, ist der Rotor 100 auf der in der Zeichnung rechten Seite im Gehäuse 8 mit einem Radiallager 58 gelagert, die sich unter Zwischenschaltung einer Tellerfeder 59 axial am Gehäuse 8 abstützt.

### Bezugszeichenliste

- 1: Bremssattel
- 2: Betätigungseinheit
- 3: Bremsscheibe
- 4: Reibbelag
- 5: Reibbelag
- 6: Elektromotor
- 7: Untersetzungsgetriebe
- 8: Gehäuse
- 9: Stator
- 10: Rotor
- 11: Gewindemutter
- 12: Gewinderolle
- 13: Gewinderolle
- 14: Spindel
- 15: Erweiterung
- 16: Radiallager
- 17: Lagerinnenring
- 18: Lageraußenring
- 19: Zylinderrolle
- 20: Resolver
- 21: Ring
- 22: Ring
- 23: Rückstellfeder
- 24: Kraftübertragungsplatte
- 25: Verdrehsicherung
- 26: Kontaktstift
- 27: Dichtung
- 28: Träger
- 29: Permanentmagnetsegment
- 30: Betätigungselement
- 31: Deckel
- 32: Haltering
- 33: Kühlrippe
- 34: Rolle
- 35: Käfig
- 36: Rotorblech
- 37: Motorgehäuse
- 38: Deckel
- 39: Paßfeder
- 40: Führungsscheibe
- 41: Druckstange
- 42: Kugelkalotte
- 43: Kugelkalotte
- 44: Fortsatz
- 45: Faltenbalg
- 46: Sonnenrad
- 47: Planetenrad
- 48: Planetenrad
- 49: Hohlrad
- 50: Innenverzahnung
- 51: Nadellager
- 52: Kugellager
- 53: Laufbahn
- 54: Laufbahn
- 55: Bereich
- 56: Teil
- 57: Flansch
- 58: Radiallager
- 59: Tellerfeder
- 60: Hülse
- 90: Stator
- 100: Stator

## Patentansprüche

1. Elektromechanisch betätigbare Scheibenbremse für Kraftfahrzeuge mit einem Bremssattel (1), sowie einer am Bremssattel (1) angeordneten Betätigungseinheit (2), mit zwei mit je einer Seitenfläche einer Bremsscheibe (3) zusammenwirkenden, im Bremssattel (1) begrenzt verschiebbar angeordneten Reibbelägen (4,5), wobei einer (4) der Reibbeläge (4,5) mittels eines Betätigungselementes (30) durch die Betätigungseinheit (2) direkt und der andere Reibbelag (5) durch die Wirkung einer vom Bremssattel (1) aufgebrachten Reaktionskraft mit der Bremsscheibe (3) in Eingriff bringbar ist, und wobei die Betätigungseinheit (2) einen koaxial zum Betätigungselement (30) angeordneten Elektromotor (6) sowie ein wirkungsmäßig zwischen ihn und dem Betätigungselement (14) angeordnetes Untersetzungsgetriebe (7) aufweist, dadurch **gekennzeichnet**, daß der Rotor (10) des Elektromotors (6) ringförmig ausgebildet ist und das Untersetzungsgetriebe (7) radial umgreift und daß das Untersetzungsgetriebe (7) als ein Rollengewindetrieb (11-14) ausgebildet ist, dessen Gewindemutter (11) mit dem Rotor (10) in kraftübertragender Verbindung steht.

2. Elektromechanisch betätigbare Scheibenbremse nach Anspruch 1, dadurch **gekennzeichnet**, daß der Rollengewindetrieb als ein Rollengewindetrieb mit Rückführung ausgebildet ist.

3. Elektromechanisch betätigbare Scheibenbremse nach Anspruch 1 oder 2, dadurch **gekennzeichnet**, daß die Kraftübertragung zwischen dem Rotor (10) und der Gewindemutter (11) mittels eines Planetengetriebes (46-50) erfolgt.

4. Elektromechanisch betätigbare Scheibenbremse nach Anspruch 3, dadurch **gekennzeichnet**, daß das Sonnenrad (46) des Planetengetriebes am Rotor (10) ausgebildet ist, während die Planetenräder (47,48) an der Gewindemutter (11) gelagert sind und mit einer das Hohlrad (49) des Planetengetriebes bildenden, im Bremssattel (1) ausgebildeten Innenverzahnung (50) im Eingriff stehen.

5. Elektromechanisch betätigbare Scheibenbremse nach Anspruch 3 oder 4, dadurch **gekennzeichnet**, daß zwischen dem Rotor (10) und der Getriebemutter (11) ein Nadellager (51) sowie ein Kugellager (52) vorgesehen sind, wobei die radial außenliegende Laufbahn (53) des Kugellagers (52) im Rotor (10) und die radial innenliegende Laufbahn (54) zumindest teilweise in der Gewindemutter (11) ausgebildet sind.

6. Elektromechanisch betätigbare Scheibenbremse nach einem der Ansprüche 1 bis 5, dadurch **gekennzeichnet**, daß das Betätigungselement durch die Spindel (14) des Rollengewindetriebs gebildet ist.

7. Elektromechanisch betätigbare Scheibenbremse nach Anspruch 6, dadurch **gekennzeichnet**, daß die Spindel (14) mit einer Kraftübertragungaplatte (24) zusammenwirkt, die dem direkt betätigbaren Reibbelag (4) zugeordnet ist.

8. Elektromechanisch betätigbare Scheibenbremse nach Anspruch 7, dadurch **gekennzeichnet**, daß zwischen der Spindel (14) und der Kraftübertragungsplatte (24) eine der Übertragung von Druckkräften dienenden Druckstange (41) angeordnet ist.

9. Elektromechanisch betätigbare Scheibenbremse nach Anspruch 8, dadurch **gekennzeichnet**, daß die Druckstange (41) teilweise innerhalb der Spindel (14) angeordnet und mittels zweier (43) Kugelkalotten (42,43) gelagert ist, von denen die erste in der Spindel (14) vorgesehen ist, während die zweite in einem axialen Fortsatz (44) der Kraftübertragungsplatte (24) ausgebildet ist.

10. Elektromechanisch betätigbare Scheibenbremse nach Anspruch 9, dadurch **gekennzeichnet**, daß die erste Kugelkalotte (42) etwa in der Mitte der axialen Länge der Spindel (14) bzw. in dem durch die Gewinderollen (12,13) begrenzten Bereich der Spindel (14) angeordnet ist.

11. Elektromechanisch betätigbare Scheibenbremse nach einem der Ansprüche 8 bis 10, dadurch **gekennzeichnet**, daß zwischen der Spindel (14) und der Kraftübertragungsplatte (24) ein metallischer Faltenbalg (45) vorgesehen ist, der koaxial zur Druckstange (41) angeordnet und mit der Spindel (14) sowie der Kraftübertragungsplatte (24) unlösbar verbunden, vorzugsweise verschweißt ist.

12. Elektromechanisch betätigbare Scheibenbremse nach Anspruch 7, dadurch **gekennzeichnet**, daß der der Spindel (14) zugeordnete Reibbelag (4) mittels einer Zugfeder an der Kraftübertragungsplatte (24) gefesselt ist.

13. Elektromechanisch betätigbare Scheibenbremse nach Anspruch 6, dadurch **gekennzeichnet**, daß die Spindel (14) an ihrem dem Reibbelag (4) zugewandten Seite eine radiale Nut aufweist, die eine am Reibbelag ausgebildete stegförmige Erhebung aufnimmt.

14. Elektromechanisch betätigbare Scheibenbremse nach Anspruch 1 oder 2, dadurch **gekennzeichnet**, daß die Gewindemutter (11) eine radiale Erweiterung (15) aufweist, die ihrer Abstützung an einem Radiallager (16) dient.

15. Elektromechanisch betätigbare Scheibenbremse nach Anspruch 14, dadurch **gekennzeichnet**, daß das Radiallager (16) als Kreuzrollenlager ausgebildet ist.

16. Elektromechanisch betätigbare Scheibenbremse nach Anspruch 14, dadurch **gekennzeichnet**, daß das Radiallager (16) als Vierpunktlager ausgebildet ist.

17. Elektromechanisch betätigbare Scheibenbremse nach Anspruch 15 oder 16, dadurch **gekennzeichnet**, daß der Lagerinnenring (17) des Radiallagers (16) durch den Umfangsbereich der Erweiterung (15) gebildet ist.

18. Elektromechanisch betätigbare Scheibenbremse nach einem der vorhergehenden Ansprüche, dadurch **gekennzeichnet**, daß der Elektromotor (6) als Außenläufermotor ausgebildet ist, dessen Stator (90) im Gehäuse (8) auf einem zylindrischen Teil (56) ortfest angeordnet ist.

19. Elektromechanisch betätigbare Scheibenbremse nach Anspruch 18, dadurch **gekennzeichnet**, daß der Rotor (100) des Elektromotors (6) mittels eines glockenförmigen Flansches (57) mit der Gewindemutter (11) in kraftübertragender Verbindung steht bzw. auf der Gewindemutter (11) gelagert ist.

20. Elektromechanisch betätigbare Scheibenbremse nach Anspruch 18 oder 19, dadurch **gekennzeichnet**, daß der Rotor (100) an seinem anderen Ende mittels eines Radiallagers (58) im Gehäuse (8) gelagert ist.

21. Elektromechanisch betätigbare Scheibenbremse nach Anspruch 20, dadurch **gekennzeichnet**, daß das Radiallager (58) am Gehäuse (8) über eine Feder, vorzugsweise eine Tellerfeder (59), axial abgestützt ist.

22. Elektromechanisch betätigbare Scheibenbremse nach einem der Ansprüche 1 bis 21, dadurch **gekennzeichnet**, daß der Elektromotor (6) als ein Permanentmagnet erregter, elektronisch kommutierbarer Elektromotor ausgeführt ist.

23. Elektromechanisch betätigbare Scheibenbremse nach einem der Ansprüche 1 bis 21, dadurch **gekennzeichnet**, daß der Elektromotor (6) als ein geschalteter Reluktanzmotor ausgeführt ist.

24. Elektromechanisch betätigbare Scheibenbremse nach einem der vorhergehenden Ansprüche, dadurch **gekennzeichnet**, daß ein kontaktloser Winkelgeber (20) vorgesehen ist, der mit dem Untersetzungsgetriebe (7) zusammenwirkt und eine Erkennung der Position des Betätigungselementes (14) ermöglicht.

25. Elektromechanisch betätigbare Scheibenbremse nach Anspruch 24, wobei die Betätigungseinheit in einem Gehäuse angeordnet ist, dadurch **gekennzeichnet**, daß der Winkelgeber (20) durch zwei durch einen Luftspalt voneinander getrennte, elektrische Wicklungen tragende Ringe (21,22) gebildet ist, wobei der eine, vorzugsweise radial innere Ring (21) mit dem Rotor (10) festverbunden ist, während der andere, vorzugsweise radial äußere Ring (22) im Gehäuse (8) drehtest angeordnet ist.

26. Elektromechanisch betätigbare Scheibenbremse nach einem der vorhergehenden Ansprüche, dadurch **gekennzeichnet**, daß zwischen der Gewindemutter (11) und dem Gehäuse (8) eine Rückstellfeder (23) vorgesehen ist, die nach erfolgter Betätigung eine Drehbewegung der Gewindemutter (11) entgegen der Betätigungsdrehrichtung ermöglicht.

27. Elektromechanisch betätigbare Scheibenbremse nach einem der vorhergehenden Ansprüche, dadurch **gekennzeichnet**, daß zwischen dem Betätigungselement (14) bzw. der Kraftübertragungsplatte (24) und dem ersten Reibbelag (4) eine Verdrehsicherung (25) vorgesehen ist.

28. Elektromechanisch betätigbare Scheibenbremse nach einem der vorhergehenden Ansprüche, dadurch **gekennzeichnet**, daß die Reibbeläge (4,5) Kontaktstifte (26) aufweisen, die eine Messung des elektrischen Widerstandes zwischen Reibbelägen (5) und Bremsscheibe (3) ermöglichen.

29. Elektromechanisch betätigbare Scheibenbremse nach einem der vorhergehenden Ansprüche, dadurch **gekennzeichnet**, daß zwischen dem Gehäuse (8) und dem Betätigungselement (Spindel 14) ein elastisches Dichtelement (27) angeordnet ist.

## Claims

1. An electromechanically actuated disc brake for motor vehicles with a brake caliper (1) and an actuating unit (2) arranged on the brake caliper (1), with two friction linings (4,5), each interacting with a respective lateral surface of a brake disc (3) and being slidable within limits in the brake caliper (1), wherein one (4) of the friction linings (4,5) is directly movable into engagement with the brake disc by way of an actuating element (30) and the actuating unit (2), while the second friction lining (5) is movable into engagement with the brake disc (3) by the action of a reaction force generated by the brake caliper (1), and wherein the actuating unit (2) consists of an electric motor (6), mounted coaxially to the actuating element (30), and a reducing gear (7) mounted between the electric motor and the actuating element (14) in terms of effect,
**characterized** in that the rotor (10) of the electric motor (6) is of ring-shaped design to surround the reducing gear (7) in a radial fashion, and in that the reducing gear (7) is designed as a threaded roller pinion (11-14), and its threaded nut (11) being linked to the rotor (10) for the purpose of power transmission.

2. An electromechanically actuated disc brake as claimed in claim 1,
**characterized** in that the threaded roller pinion is designed as a threaded roller pinion with a return feature.

3. An electromechanically actuated disc brake as claimed in claim 1 or claim 2,
**characterized** in that the power transmission between the rotor (10) and the threaded nut (11) is executed by way of a planetary gear (46-50).

4. An electromechanically actuated disc brake as claimed in claim 3,
**characterized** in that the sun wheel (46) of the planetary gear is provided at the rotor (10), while the planetary gears (47,48) are positioned at the threaded nut (11), interacting with an internal toothing (50) which is designed in the brake caliper (1) and constitutes the hollow wheel (49) of the planetary gear.

5. An electromechanically actuated disc brake as claimed in claim 3 or claim 4,
**characterized** in that between rotor (10) and threaded nut (11) there is provision of a needle bearing (51) and a ball bearing (52), and the radially external track (53) of the ball bearing (52) is provided in the rotor (10), and its radially internal track (54) is at least partially designed in the threaded nut (11).

6. An electromechanically actuated disc brake as claimed in any one of claims 1 to 5,
**characterized** in that the actuating element is formed by the spindle (14) of the threaded roller pinion.

7. An electromechanically actuated disc brake as claimed in claim 6,
**characterized** in that the spindle (14) cooperates with a power transmission plate (24) which is associated with the direct-actuated friction lining (4).

8. An electromechanically actuated disc brake as claimed in claim 7,
**characterized** in that between the spindle (14) and power transmission plate (24), a plunger rod (41) is installed for the purpose of transmitting pressure forces.

9. An electromechanically actuated disc brake as claimed in claim 8,
**characterized** in that the plunger rod (41) is located partially within the spindle (14) and is mounted by way of two spherical caps (42,43), with one cap located in the spindle (14), and the second one is designed in an axial extension (44) of the power transmission plate (24).

10. An electromechanically actuated disc brake as claimed in claim 9,
**characterized** in that the first spherical cap (42) is located in the approximate center of the spindle's (14) axial length, and/or within the spindle's (14) range as defined by threaded rollers (12,13).

11. An electromechanically actuated disc brake as claimed in any one of claims 8 to 10,
**characterized** in that interposed between the spindle (14) and the power transmission plate (24) is a metallic pleated bellows (45) which is placed coaxially to plunger rod (41) and undetachably attached to spindle (14) and the power transmission plate (24), preferably by welding.

12. An electromechanically actuated disc brake as claimed in claim 7,
**characterized** in that the friction lining (4) associated with the spindle (14) is tethered to the power transmission plate (24) by means of a tension spring.

13. An electromechanically actuated disc brake as claimed in claim 6,
**characterized** in that the spindle (14) includes a radial groove on its side facing the friction lining (4) to receive a web-shaped projection provided on the friction lining.

14. An electromechanically actuated disc brake as claimed in claim 1 or claim 2,
**characterized** in that the threaded nut (11) includes a radial expansion (14) to facilitate its support on a radial bearing (16).

15. An electromechanically actuated disc brake as claimed in claim 14,
**characterized** in that the radial bearing (16) is configured as a crossover bearing.

16. An electromechanically actuated disc brake as claimed in claim 14,
**characterized** in that the radial bearing (16) is configured as a four-point bearing.

17. An electromechanically actuated disc brake as claimed in claim 15 or claim 16,
**characterized** in that the circumferential dimension of the expansion (15) will provide the internal ring (17) of the radial bearing (16).

18. An electromechanically actuated disc brake as claimed in any one of the preceding claims,
**characterized** in that the electric motor (6) is designed as an externally operating motor, with its stator (90) firmly installed inside the housing (8) on a cylindrical part (56).

19. An electromechanically actuated disc brake as claimed in claim 18,
**characterized** in that the rotor (100) of the electric motor (6), by way of a bell-shaped flange (57), is in a power transmission connection with the threaded nut (11) and/or is installed on the threaded nut (11).

20. An electromechanically actuated disc brake as claimed in claim 18 or claim 19,
**characterized** in that the rotor (100) with its other end is mounted in the housing (8) by way of a radial bearing (58).

21. An electromechanically actuated disc brake as claimed in claim 20,
**characterized** in that the radial bearing (58) is axially supported on the housing (8) by way of a spring, preferably a (Belleville) washer spring (59).

22. An electromechanically actuated disc brake as claimed in any one of claims 1 to 21,
**characterized** in that the electric motor (6) is designed as a permanent magneto-excited, electronically commutating electric motor.

23. An electromechanically actuated disc brake as claimed in any one of claims 1 to 21,
**characterized** in that the electric motor (6) is designed as a connected reluctance motor.

24. An electromechanically actuated disc brake as claimed in any one of the preceding claims,
**characterized** in that there is provision of a contact-free angle indicator (20) which cooperates with the reducing gear (7) for the purpose of monitoring the position of the actuating element (14).

25. An electromechanically actuated disc brake as claimed in claim 24, and the actuating unit is accommodated in a housing,
**characterized** in that the resolver (20) consists of two rings (21,22) with electric winding, spaced by an air gap, with the one ring, preferably the radially internal ring (21) firmly connected to the rotor (10), and the other ring, preferably the radially external ring (22) being unrotatably installed in the housing (8).

26. An electromechanically actuated disc brake as claimed in any one of the preceding claims,
**characterized** in that interposed between the threaded nut (11) and the housing (8) is a readjusting spring (23) which, following actuation, permits rotation of the threaded nut (11) in opposition to the actuating direction of rotation.

27. An electromechanically actuated disc brake as claimed in any one of the preceding claims, **characterized** in that a torsion prevention
mechanism (25) is provided between the actuating element (14) and/or the power transmission plate (24) and the first friction lining (4).

28. An electromechanically actuated disc brake as claimed in any one of the preceding claims,
**characterized** in that the friction linings (4,5) have contact pins (26) which permit measuring the electrical resistance between the friction linings (5) and the brake disc (3).

29. An electromechanically actuated disc brake as claimed in any one of the preceding claims,
**characterized** in that an elastic sealing element (27) is interposed between the housing (8) and the actuating element (spindle 14).

## Revendications

1. Frein à disque à commande électromécanique pour véhicules automobiles, comprenant un étrier de frein (1) ainsi qu'une unité d'actionnement (2) disposée sur l'étrier de frein (1), comportant deux garnitures de frottement (4, 5) coopérant chacune avec l'une des faces latérales d'un disque de frein (3), pouvant être déplacées en coulissant de façon limitée dans l'étrier de frein (1), où l'une (4) des garnitures de frottement peut être amenée en engagement avec le disque de frein (3) de façon directe par l'unité d'actionnement (2), via un élément actionneur (30), et l'autre garniture de frottement (5) peut y être amenée par l'effet d'une force de réaction appliquée par l'étrier de frein (1), et où l'unité d'actionnement (2) comporte un moteur électrique (6) disposé coaxialement à l'élément actionneur (30), ainsi qu'un mécanisme réducteur (7) fonctionnellement disposé entre ce moteur et l'élément actionneur (14),
caractérisé en ce que le rotor (10) du moteur électrique (6) est configuré en forme d'un anneau et entoure radialement le mécanisme réducteur (7), et en ce que le mécanisme réducteur (7) est réalisé sous forme d'un entraînement à vis à rouleaux (11 à 14), dont l'écrou fileté (11) est en liaison de transmission de forces avec le rotor (10).

2. Frein à disque à commande électromécanique selon la revendication 1, caractérisé en ce que l'entraînement à vis à rouleaux est réalisé sous forme d'un entraînement à vis à recirculation des rouleaux.

3. Frein à disque à commande électromécanique selon la revendication 1 ou 2, caractérisé en ce que la transmission de forces entre le rotor (10) et l'écrou fileté (11) s'effectue au moyen d'un train d'engrenages planétaires (46 à 50).

4. Frein à disque à commande électromécanique selon la revendication 3, caractérisé en ce que le pignon central (46) du train planétaire est conformé sur le rotor (10), alors que les pignons satellites (47, 48) sont logés sur l'écrou fileté (11) et sont en engrènement avec une denture intérieure (50) constituant la couronne dentée (49) du train planétaire, aménagée dans l'étrier de frein (1).

5. Frein à disque à commande électromécanique selon la revendication 3 ou 4, caractérisé en ce qu'un roulement à aiguilles (51) ainsi qu'un roulement à billes (52) sont prévus entre le rotor (10) et l'écrou (11), la bague de roulement (53) située radialement à l'extérieur du roulement à billes (52) étant aménagée dans le rotor (10), et la bague de roulement (54) située radialement à l'intérieur étant aménagée au moins en partie dans l'écrou fileté (11).

6. Frein à disque à commande électromécanique selon l'une des revendications 1 à 5, caractérisé en ce que l'élément actionneur est constitué par la broche (14) de l'entraînement à vis à rouleaux.

7. Frein à disque à commande électromécanique selon la revendication 6, caractérisé en ce que la broche (14) coopère avec une plaque (24) de transmission des forces, qui est associée à la garniture de frottement (4) à commande directe.

8. Frein à disque à commande électromécanique selon la revendication 7, caractérisé en ce qu'une tige de poussée (41) servant à la transmission des efforts de pression est disposée entre la broche (14) et la plaque (24) de transmission des forces.

9. Frein à disque à commande électromécanique selon la revendication 8, caractérisé en ce que la tige de poussée (41) est disposée en partie à l'intérieur de la broche (14) et est montée au moyen de deux calottes sphériques (42, 43) dont la première est prévue dans la broche (14), alors que la seconde est aménagée dans un prolongement axial (44) de la plaque (24) de transmission des forces.

10. Frein à disque à commande électromécanique selon la revendication 9, caractérisé en ce que la première calotte sphérique (42) est disposée à peu près au milieu de la longueur axiale de la broche (14), voire dans la zone de la broche (14) qui est délimitée par les rouleaux à vis (12, 13).

11. Frein à disque à commande électromécanique selon l'une des revendications 8 à 10, caractérisé en ce qu'un soufflet métallique (45) est prévu entre la broche (14) et la plaque (24) de transmission des forces, le soufflet étant disposé coaxialement à la tige de poussée (41) et relié de façon indémontable à la broche (14) et à la plaque (24) de transmission des forces (24), y étant de préférence soudé.

12. Frein à disque à commande électromécanique selon la revendication 7, caractérisé en ce que la garniture de frottement (4) associée à la broche (14) est liée à la plaque (24) de transmission des forces au moyen d'un ressort de traction.

13. Frein à disque à commande électromécanique selon la revendication 6, caractérisé en ce que la broche (14) comporte, dans sa face orientée vers la garniture de frottement (4), une rainure radiale qui reçoit un bossage en forme de nervure aménagé sur la garniture de frottement.

14. Frein à disque à commande électromécanique selon la revendication 1 ou 2, caractérisé en ce que l'écrou fileté (11) comporte une extension radiale (15) servant à l'appui de celui-ci sur un palier radial (16).

15. Frein à disque à commande électromécanique selon la revendication 14, caractérisé en ce que le palier radial (16) est réalisé sous forme d'un roulement à rouleaux en croix.

16. Frein à disque à commande électromécanique selon la revendication 14, caractérisé en ce que le palier radial (16) est réalisé sous forme d'un roulement quatre points.

17. Frein à disque à commande électromécanique selon la revendication 15 ou 16, caractérisé en ce que la bague de roulement intérieure (17) du palier radial (16) est constituée par la partie périphérique de l'extension (15).

18. Frein à disque à commande électromécanique selon l'une des revendications précédentes, caractérisé en ce que le moteur électrique (6) est réalisé sous forme d'un moteur à induit externe, dont le stator (90) est monté de façon stationnaire sur un élément cylindrique (56) dans le boîtier (8).

19. Frein à disque à commande électromécanique selon la revendication 18, caractérisé en ce que l'induit (100) du moteur électrique (6) est en liaison de transmission des forces avec l'écrou fileté (11) ou est monté sur l'écrou fileté (11), par l'intermédiaire d'une bride (57) en forme de cloche.

20. Frein à disque à commande électromécanique selon la revendication 18 ou 19, caractérisé en ce que l'induit (100) est logé dans le boîtier (8), par son autre extrémité, par l'intermédiaire d'un roulement radial (58).

21. Frein à disque à commande électromécanique selon la revendication 20, caractérisé en ce que le roulement radial (58) s'appuie axialement sur le boîtier (8) par l'intermédiaire d'un ressort, de préférence par l'intermédiaire d'une rondelle Belleville (59).

22. Frein à disque à commande électromécanique selon l'une des revendications 1 ou 21, caractérisé en ce que le moteur électrique (6) est réalisé sous forme d'un moteur électrique excité par aimants permanents, à commutation électronique.

23. Frein à disque à commande électromécanique selon l'une des revendications 1 ou 21, caractérisé en ce que le moteur électrique (6) est réalisé sous forme d'un moteur commuté à réluctance.

24. Frein à disque à commande électromécanique selon l'une des revendications précédentes, caractérisé en ce qu'un capteur d'angle (20) sans contact est prévu, qui coopère avec le mécanisme réducteur (7) et permet une détection de la position de l'élément actionneur (14).

25. Frein à disque à commande électromécanique selon la revendication 24, où l'unité d'actionnement est disposée dans un boîtier, caractérisé en ce que le capteur d'angle (20) est constitué de deux anneaux (21, 22) séparés l'un de l'autre par un entrefer et portant des enroulements électriques, l'un d'eux, de préférence l'anneau (21) radialement intérieur, étant relié de façon fixe au rotor (10), alors que l'autre, de préférence l'anneau (22) radialement extérieur, est disposé de façon fixe en rotation sur le boîtier (8).

26. Frein à disque à commande électromécanique selon l'une des revendications précédentes, caractérisé en ce qu'un ressort de rappel (23) est prévu entre l'écrou fileté (11) et le boîtier (8) et, après exécution d'un actionnement, permet un entraînement en rotation de l'écrou fileté (11) dans le sens inverse du sens de rotation d'actionnement.

27. Frein à disque à commande électromécanique selon l'une des revendications précédentes, caractérisé en ce qu'une sécurité anti-rotation (25) est prévue entre l'élément actionneur (14) ou la plaque (24) de transmission des forces et la première garniture de frottement (4).

28. Frein à disque à commande électromécanique selon l'une des revendications précédentes, caractérisé en ce que les garnitures de frottement (4, 5) comportent des doigts de contact (26) qui permettent une mesure de la résistance électrique entre les garnitures de frottement (5) et le disque de frein (3).

29. Frein à disque à commande électromécanique selon l'une des revendications précédentes, caractérisé en ce qu'un élément d'étanchéité élastique (27) est disposé entre le boîtier (8) et l'élément actionneur (la broche 14).
